# EUROPÄISCHE PATENTSCHRIFT

(11) **EP 1 639 526 B1**
(45) Veröffentlichungstag und Bekanntmachung des Hinweises auf die Patenterteilung: **19.04.2017**
(21) Anmeldenummer: 04738820.2
(22) Anmeldetag: 30.06.2004
(51) Int. Cl.: G06K 19/07, H02J 50/20

(54) **ELEKTRONISCHES BAUELEMENT FÜR IDENTIFIKATIONSMARKEN**
ELECTRONIC COMPONENT USED FOR ID TAGS
COMPOSANT ELECTRONIQUE POUR MARQUES D'IDENTIFICATION

(30) Priorität: 01.07.2003 DE 10329655
(43) Veröffentlichungstag der Anmeldung: 29.03.2006
(73) Patentinhaber: Infineon Technologies AG, 85579 Neubiberg (DE)
(72) Erfinder: BREDERLOW, Ralf, 85586 Poing (DE); BRIOLE, Sylvain, 63450 Hanau (DE); PACHA, Christian, 81739 München (DE); THEWES, Roland, 82194 Gröbenzell (DE); WEBER, Werner, 80637 München (DE)
(74) Vertreter: Viering, Jentschura & Partner mbB Patent- und Rechtsanwälte
(86) Internationale Anmeldenummer: PCT/DE2004/001374
(87) Internationale Veröffentlichungsnummer: WO 2005/004046

(56) Entgegenhaltungen:
- WO-A-00/64004
- US-A- 5 870 031
- US-B1- 6 229 349
- USAMI M ET AL: "Powder LSI: an ultra small RF identification chip for individual recognition applications" IEEE INTERNATIONAL SOLID-STATE CIRCUITS CONFERENCE, 9. Februar 2003 (2003-02-09), Seiten 1-10, XP010661481 in der Anmeldung erwähnt

## Beschreibung

Die Erfindung schafft ein elektronisches Bauelement, welches zumindest ein Paar von funktionsgleichen elektronischen Teil-Bauelementen aufweist.

Elektronisches Bauelemente werden heutzutage in vielen Bereichen eingesetzt. Ein Einsatzgebiet ist zum Beispiel das Gebiet der Identifizierungsmarken, welche auch als "ID-Tags" bezeichnet werden. Die ID-Tags werden üblicherweise in Anordnungen verwendet, um Personen, Objekte oder Tiere zu identifizieren oder zu lokalisieren. Dies geschieht für eine Vielzahl von Verwendungszwecke, zum Beispiel bei Zugangskontrollen, Inventarverwaltung, Materialverwaltung, Herstellungsautomatisierung usw..

Die Anordnungen weisen im Allgemeinen eine Transpondereinheit und eine Basisstation auf. Üblicherweise werden die ID-Tags ohne direkten Kontakt zwischen der Transpondereinheit und der Basisstation, d.h. zum Beispiel mittels Funkübertragung, ausgelesen. Wichtige Kriterien, um eine solche Identifizierungsmarke zu beschreiben, sind zum Beispiel der Funktionsbereich, d.h. der Entfernungsbereich innerhalb dessen die Identifizierungsmarke ausgelesen werden kann und die Abhängigkeit der Ausleseposition, d.h. wie exakt die Identifizierungsmarke auf die Basisstation (Auslesevorrichtung) ausgerichtet werden muss. Zusätzliche Kriterien für das ID-Tag sind eine ausreichende Datenspeicherungskapazität und der Herstellungspreis. Allgemein gesprochen wird versucht ID-Tags mit einem möglichst großen Funktionsbereich und mit einer möglichst geringen Auslesepositionsabhängigkeit herzustellen, um so das Verwenden der ID-Tags zu vereinfachen.

Die Datenspeicherungskapazität sollte groß genug sein, um zum Beispiel mittels der Informationen, welche auf dem ID-Tag gespeichert sind, zwischen zwei Produkten innerhalb eines Supermarktes unterscheiden zu können. Zum Beispiel kann hierzu der deutsche EAN 13-Code (CCG Germany-EAN 13 Norm) verwendet werden, welcher 52 Bit verwendet. Weiterhin ist zu beachten, dass für viele Anwendungen, zum Beispiel für die Anwendung als individuelle Produktidentifikation in Supermärkten, die Herstellungskosten des ID-Tags möglichst gering sein sollten.

Als effektivste kontaktlose automatische Identifizierungssysteme haben sich bisher Radiofrequenz-Identifizierungssysteme, auch als RFID (Radio Frequency Identification) bezeichnet, herausgestellt. Im Radiofrequenz-Bereich werden, um möglichst geringe Herstellungskosten zu erzielen, meistens so genannte passive RFID-Tags verwendet. Diese weisen keine Batterie auf und stellen eine größere Flexibilität und Verlässlichkeit zur Verfügung. Ferner benötigen sie auch nur geringe oder gar keine Wartung.

Passive RFID-Tag Systeme weisen im Allgemeinen zwei Teile auf. Eine Auslesevorrichtung, welche auch als Ausleser bezeichnet wird, und ein passives ID-Tag. Das ID-Tag weist üblicherweise als Eingang und/oder Ausgang eine Antennenspule entweder als eine gewickelte oder eine gedruckte Antennenspule und einen Halbleiter-Chip mit einem integrierten Gleichrichter-Schaltkreis und zusätzlichen Front-End-Elementen auf, welche zum Beispiel einfache Modulationsschaltkreise oder nichtflüchtige Speicher sein können. Das ID-Tag wird mittels einer zeitlich veränderlichen Radiofrequenzwelle mit Energie versorgt, welche von dem Ausleser erzeugt und übertragen wird. Dieses Radiofrequenzsignal wird auch als Trägersignal oder Träger bezeichnet. Wenn das elektromagnetische Feld durch die Antennenspule hindurchtritt, wird durch die Flussänderung des Magnetfeldes durch die Spule hindurch eine Wechselspannung in der Spule induziert. Diese Wechselspannung wird gleichgerichtet und als Energiequelle für das ID-Tag verwendet. Wenn Energie, welche mittels eines Auslesers übertragen wurde, in dem ID-Tag zur Verfügung steht, wird die Information, welche in dem ID-Tag gespeichert ist, an den Ausleser übermittelt.

Die Übermittlung der Informationen zwischen dem Ausleser und dem ID-Tag basiert auf der Modulation des elektromagnetischen Feldes, welches durch eine Spule des Auslesers erzeugt wird. Durch wiederholtes Parallelschalten, d.h. Einkoppeln als induktive Last, der ID-Tag Spule mittels eines Transistors, kann das ID-Tag geringe Fluktuationen in dem elektromagnetischen Feld der Trägerwelle des Auslesers hervorrufen. Hierbei verhält sich die elektromagnetische Kopplung zwischen ID-Tag und Ausleser im wesentlichen wie ein Transformator. Wenn die Spule des ID-Tags, welche als Sekundarwicklung angesehen werden kann, kurzzeitig parallelgeschaltet wird, erfährt die Spule des Auslesers, welche als Primärwicklung angesehen werden kann, einen kurzeitigen Spannungsabfall, d.h. eine Amplitudenmodulation des vom Auslesers übertragenen elektromagnetischen Feldes. Dies wird häufig als Rückstreuung bezeichnet. Mittels Detektierens dieses Rückstreuungs-Signals kann die Information, welche in dem ID-Tag gespeichert ist, vollständig in dem Ausleser empfangen und identifiziert werden. Somit kommt es zu einer bidirektionalen Kommunikation zwischen dem Ausleser und dem ID-Tag.

Diese Amplitudenmodulation des elektromagnetischen Feldes des Auslesers stellt einen Kommunikationspfad zurück zu dem Ausleser bereit. Die Datenbits, d.h. die im ID-Tag gespeicherten und zu dem Ausleser übertragenen Daten, können auf eine Anzahl von verschiedenen Weisen verschlüsselt oder zusätzlich moduliert sein.

Das vom ID-Tag Ausleser erzeugte elektromagnetische Feld dient mehreren Zwecken. Einerseits dient es dazu, genug Energie in der Spule des ID-Tags zu induzieren, um das ID-Tag mit ausreichend Energie zu versorgen. Andererseits stellt es für das ID-Tag eine Uhr zur Synchronisation bereit. Ferner wird das elektromagnetische Feld dazu verwendet, als Trägerwelle für die Übertragung der im ID-Tag gespeicherten Informationen zu den Ausleser zu dienen.

Der übliche Verlauf zum Aufbau und Prüfen einer Kommunikationsverbindung das so genannte "handshaking" zwischen einem ID-Tag und einem Ausleser folgt dem folgenden Verlauf.
- Der Ausleser erzeugt eine kontinuierliche sinusförmige Radiofrequenz-Trägerwelle, wobei er ständig überprüft, ob es zu einer Modulation dieser Trägerwelle kommt. Eine detektierte Modulation der Trägerwelle bzw. des elektromagnetischen Feldes zeigt die Präsenz eines ID-Tags an.
- Ein ID-Tag tritt in das durch den Ausleser erzeugte Radiofrequenzfeld ein. Sobald das ID-Tag genügend Energie aufgenommen hat, um korrekt zu funktionieren, moduliert es die Trägerwelle und beginnt damit die Daten, welche in dem ID-Tag gespeichert sind, an einen Ausgangs-Transistor zu takten, d.h. taktweise zu übermitteln. Üblicherweise schaltet der Ausgangs-Transistor die Antennenspule des ID-Tags.
- Der Ausgangstransistor des ID-Tags schaltet abhängig von den in dem ID-Tag gespeicherten Daten die Antennenspule parallel, d.h. die Antennenspule des ID-Tags wird induktiv als Last in den Ausleser eingekoppelt, wodurch die Daten getaktet aus dem Speicher des ID-Tags ausgelesen werden.
- Das Parallelschalten der Antennenspule des ID-Tags verursacht eine kurzzeitige Fluktuation (Dämpfung) der Trägerwelle, was als eine leichte Änderung in der Amplitude der Trägerwelle detektiert werden kann.
- Der Ausleser detektiert die amplitudenmodulierten Daten und verarbeitet den resultierenden Bitstrom gemäß den Kodierungs- und Datenmodulationsverfahren, welche verwendet wurden.

Die Amplituden-Modulation des elektromagnetischen Feldes des Auslesers stellt einen Kommunikationspfad zurück zu dem Ausleser bereit. Die Datenbits, d.h. die im ID-Tag gespeicherten und zu dem Ausleser übertragenen Daten, können dann auf eine Anzahl verschiedener Weisen verschlüsselt oder zusätzlich moduliert werden.

Obwohl alle Daten wie oben beschrieben mittels Rückstreuungs-Modulation zu dem Ausleser übertragen werden, wird die tatsächliche Modulation der einzelnen Datenbits als "1" und "0" mittels des Direkt-Modulations-Verfahrens durchgeführt. In der Direkt-Modulation wird ein "Hoch-Level" in der Einhüllenden der Trägerwelle als eine "1" und ein "Niedrig-Level" als eine "0" ausgewertet. Diese Direkt-Modulation kann eine hohe Datenrate bereitstellen, aber stellt nur eine geringe Rauschunanfälligkeit bereit.

Der hier beschriebene Stand der Technik, wie er zum Beispiel in [1] beschreiben ist, weist eine Vielzahl von Nachteilen auf.

Zum Beispiel benötigt das ID-Tag eine relativ große Fläche, da viele elektronische Bauteile, zum Bespiel ein Gleichrichter-Schaltkreis, auf dem Chip des ID-Tags angeordnet werden müssen. Dieser Gleichrichter-Schaltkreis benötigt nicht nur Fläche, sondern er verbraucht auch Energie. Hierdurch werden die Kosten erhöht und das Kosten/Flächen Verhältnis verschlechtert. Ein zweiter Nachteil ist die komplexe Geometrie, welche unter anderem durch eine Mischung von Bauteilen für verschiedene Spannungsversorgungen hervorgerufen wird. Ferner kommt es durch diese Mischung auch zu Energieverlusten beim Umwandeln von Wechselspannung zu Gleichspannung oder umgekehrt. Außerdem verhindert die relativ große Komplexität des ID-Tags auch, dass diese Art von Architektur auch auf anderen kostengünstigeren Substraten, wie zum Beispiel Polymeren, implementiert werden kann.

Aus [2] ist ein Abfrageeinrichtungssystem mit einem passiven Label bekannt, welches eine Abfrageeinrichtung zum übermitteln von Abfragesignalen, ein oder mehrere Labels oder passive Transponder, welche ein Antwortsignal erzeugen, welches in Antwort auf das Anfragsignal codierte Informationen enthält, und einen Empfänger und Decoder aufweist zum Empfangen und Dekodieren der enthaltenen Informationen.

Aus [3] ist eine Empfangs/Rückstreuanordnung zum Ausführen einer kontaktlosen Datenübertragung bekannt, welche einen integrierten Schaltkreis mit zwei Antennen, eine Reihenschaltung von drei Kapazitäten, welche zwischen die zwei Antennen geschaltet sind, wobei die mittlere Kapazität ein MOS-Varaktor ist, eine steuerbare variable Spannungsquelle, welche über den MOS_Varaktor geschaltet ist, und eine Steuereinheit aufweist, welche die Spannungsquelle steuert.

In [4] wird eine Gleichrichterschaltung mit vier Transistoren beschrieben, an welche eine Wechselspannung angelegt werden kann. Zwei P-Kanaltransistoren werden verwendet, um den Spannungsabfall zwischen der Spitzenspannung und der Ausgangsspannung des Gleichrichters zu reduzieren. Zwei N-Kanaltransistoren werden verwendet, um den Spannungsabfall zwischen der Masse und dem Substrat der Schaltung zu reduzieren. Jedoch wird auch in diesem Fall viel Platz für die beschriebene Gleichrichterschaltung benötigt.

In [5] wird ein RF-Transponder mit einer Gleichrichtereinrichtung beschrieben.

Der Erfindung liegt das Problem zugrunde, die oben genannten Nachteile des Standes der Technik zu lösen und ein elektronisches Bauelement, ein ID-Tag und eine ID-Tag/Ausleser-Anordnung zu schaffen, welche kostengünstiger herzustellen sind und bei dem das elektronische Bauelement ein verbessertes Kosten-zu-Flächen-Verhältnis aufweist.

Das Problem wird durch ein elektronisches Bauelement, ein ID-Tag und eine ID-Tag/Ausleser-Anordnung mit den Merkmalen gemäß den unabhängigen Patentansprüchen gelöst.

Ein elektronisches Bauelement, welches mittels einer Wechselspannung betreibbar ist, weist mindestens einen Eingang, mindestens einen Ausgang und ein Paar von funktionsgleichen elektronischen Teil-Bauelementen auf, wobei die beiden elektronischen Teil-Bauelemente parallel zueinander zusammengeschaltet sind und wobei der mindestens eine Eingang des elektronischen Bauelements mit einem jeweiligen Eingang der beiden funktionsgleichen elektronischen Teil-Bauelementen gekoppelt ist und wobei der mindestens eine Ausgang des elektronischen Bauelements mit einem jeweiligen Ausgang der beiden funktionsgleichen elektronischen Teil-Bauelemente gekoppelt ist. Das elektronische Bauelement ist derart eingerichtet, dass am mindestens einem Ausgang während einer ersten Halbwelle einer Wechselspannung nur ein Ausgangsignal eines ersten Teil-Bauelementes des Paares von funktionsgleichen elektronischen Teil-Bauelementen abgreifbar ist, wohingegen während der zweiten Halbwelle der Wechselspannung nur ein Ausgangsignal des zweiten Teil-Bauelementes des Paares von funktionsgleichen elektronischen Teil-Bauelementen abgreifbar ist.

Ein ID-Tag weist ein elektronisches Bauelement, welches mit einer Wechselspannung betreibbar ist, mit mindestens einem Eingang, mindestens einem Ausgang und ein Paar von funktionsgleichen elektronischen Teil-Bauelementen auf, wobei der mindestens eine Eingang des elektronischen Bauelements mit einem jeweiligen Eingang der beiden funktionsgleichen elektronischen Teil-Bauelemente gekoppelt ist und wobei der mindestens eine Ausgang des elektronischen Bauelements mit einem jeweiligen Ausgang der beiden funktionsgleichen elektronischen Teil-Bauelementen gekoppelt ist. Ferner ist das elektronische Bauelement derart eingerichtet, dass am mindestens einen Ausgang während einer ersten Halbwelle einer Wechselspannung nur ein Ausgangsignal eines ersten Teil-Bauelementes des Paares von funktionsgleichen elektronischen Teil-Bauelementen abgreifbar ist, wohingegen während der zweiten Halbwelle der Wechselspannung nur ein Ausgangsignal des zweiten Teil-Bauelementes des Paares von funktionsgleichen elektronischen Teil-Bauelementen abgreifbar ist.

Eine Anordnung weist eine Auslesevorrichtung und ein ID-Tag mit einem elektronischen Bauelement auf, welches mit einer Wechselspannung betreibbar ist und welches mindestens einen Eingang, mindestens einen Ausgang und ein Paar von funktionsgleichen elektronischen Teil-Bauelementen aufweist, wobei der mindestens eine Eingang des elektronischen Bauelements mit einem jeweiligen Eingang der beiden funktionsgleichen elektronischen Teil-Bauelementen gekoppelt ist und wobei der mindestens eine Ausgang des elektronischen Bauelements mit einem jeweiligen Ausgang der beiden funktionsgleichen elektronischen Teil-Bauelementen gekoppelt ist. Ferner ist das elektronische Bauelement derart eingerichtet, dass am mindestens einen Ausgang während einer ersten Halbwelle einer Wechselspannung nur ein Ausgangsignal eines ersten Teil-Bauelementes des Paares von funktionsgleichen elektronischen Teil-Bauelementen abgreifbar ist, wohingegen während der zweiten Halbwelle der Wechselspannung nur ein Ausgangsignal des zweiten Teil-Bauelementes des Paares von funktionsgleichen elektronischen Teil-Bauelementen abgreifbar ist. Ferner sind die Auslesevorrichtung und das ID-Tag derart eingerichtet, dass sie berührungsfrei miteinander kommunizieren können.

Anschaulich kann die Erfindung darin gesehen werden, dass elektronische Teil-Bauelemente, im Weiteren auch als Funktionsblock bezeichnet, welche in einem elektronischen Bauelement angeordnet sind, in funktionsgleichen Paaren vorgesehen werden. Ein erstes elektronisches Teil-Bauelement eines Paares wird während einer ersten Halbwelle, d.h. mit der einen Polarität, einer Wechselspannung betrieben, während das zweite elektronische Teil-Bauelement des Paares während der zweiten Halbwelle, d.h. mit der anderen Polarität, der Wechselspannung betrieben wird. D.h. ein elektronisches Teil-Bauelement eines Paares ist derart eingerichtet, dass es mit dem positiven Anteil einer Wechselspannung betrieben werden kann, wohingegen das andere elektronische Teil-Bauelement eines Paares derart eingerichtet ist, dass es mit dem negativen Anteil einer Wechselspannung betrieben werden kann.

Durch die Anordnung von funktionsgleichen elektronischen Teil-Bauelementen in Paaren, ist es möglich den Gleichrichter-Schaltkreis, welcher im Stande der Technik nötig ist, einzusparen. Hierdurch wird sowohl der Platz des Gleichrichter-Schaltkreises in dem elektronischen Bauelement eingespart, als auch die Verluste beim Umwandeln einer Wechselspannung in eine Gleichspannung vermieden. Zwar wird jedes elektronische Teil-Bauelement doppelt ausgeführt, wodurch der Platzbedarf ansteigt, jedoch wird dieser gesteigerte Platzbedarf des elektronischen Bauelements durch die Einsparung des Gleichrichter-Schaltkreises überkompensiert.

Bevorzugte Weiterbildungen der Erfindung ergeben sich aus den abhängigen Ansprüchen. Hierbei gelten bevorzugte Weiterbildungen des elektronischen Bauelements auch für das erfindungsgemäße ID-Tag und für die Anordnung, welche eine Auslesevorrichtung und ein erfindungsgemäßes ID-Tag aufweist, und umgekehrt.

Vorzugsweise weist das elektronische Bauelement eine Mehrzahl von Paaren funktionsgleicher elektronischer Teil-Bauelementen auf.

Durch das Anordnen von einer Mehrzahl von Paaren von funktionsgleichen elektronischen Teil-Bauelementen, lassen sich verschiedene und komplexe Verwendungen des elektronischen Bauelements verwirklichen.

In einer Weiterbildung des elektronischen Bauelements ist zumindest ein Paar funktionsgleicher elektronischer Teil-Bauelementen ein Paar Logik-Gatter, ein Paar Inverter und/oder ein Paar Flip-Flops.

Hierbei können alle im Stand der Technik bekannten Logik-Gatter, Inverter und Flip-Flops verwendet werden.

Besonders bevorzugt weist das elektronische Bauelement eine Spule auf.

Die Spule kann einerseits als induktiv einkoppelbare Last für eine kontaktfrei gekoppelten externen Vorrichtung dienen, andererseits kann die Spule auch für die induktive Einkopplung der Wechselspannung durch ein von der externen Vorrichtung erzeugtes elektromagnetischen Feldes dienen.

Das elektronische Bauelement kann einen Spannungsbegrenzer aufweisen, welcher die Spannung, welche an einem elektronischen Teil-Bauelement des Paares von funktionsgleichen elektronischen Teil-Bauelementen anliegt, begrenzt.

Durch den Spannungsbegrenzer kann sichergestellt werden, dass die an einem elektronischen Teil-Bauelement anliegende Spannung nicht einen bestimmten Wert übersteigt, wodurch das elektronische Teil-Bauelement zerstören werden könnte. Dies ist insbesondere vorteilhaft, wenn das elektrische Bauelement in einem RFID-Tag eingesetzt wird, da hierbei die in der Spule induzierte Wechselspannung nicht konstant werden kann, weil sie unter anderem vom Abstand zwischen Ausleser und RFID-Tag bestimmt wird, welcher im Allgemeinen nicht konstant gehalten werden kann.

Zumindest ein elektronisches Teil-Bauelement des Paares von funktionsgleichen elektronischen Teil-Bauelementen kann einen Schalter aufweisen.

Mittels eines Schalters, z.B. eines Transistors, kann auf einfache Weise erreicht werden, dass nur immer ein Ausgangssignal eines Teil-Bauelements eines Paares von funktionsgleichen elektronischen Teil-Bauelementen an dem Ausgang des elektronischen Bauelements anliegt.

Vorzugsweise weist das ID-Tag einen Speicher zum Speichern von Informationen auf.

Hierdurch ist es möglich Informationen in dem ID-Tag zu speichern, welche sich zum Beispiel auf Personen, Objekte oder Tiere beziehen, um diese zu identifizieren oder zu lokalisieren. Dies kann für eine Vielzahl von Verwendungszwecken, zum Beispiel bei Zugangskontrollen, Inventarverwaltung, Materialverwaltung, Herstellungsautomatisierung usw. geschehen.

In einer Weiterbildung weist das ID-Tag einen Kodierer zum Kodieren von Informationen auf.

Der Kodierer des ID-Tags kann derart eingerichtet sein, dass mit ihm Zeit-Kodierung und/oder Puls-Kodierung möglich ist.

Insbesondere bei einer kombinierten Zeit- und Pulskodierung ist es möglich die auf einem ID-Tag gespeicherten Informationen in einer kompakten Weise an einen Ausleser zu übermitteln. Zum Beispiel kann die Information, welches Datenbit, d.h. ein erstes, zweites, drittes... Datenbit, einer Information gerade übertragen wird, mittels einer Zeit-Kodierung, d.h. einer Frequenzmodulation, verschlüsselt werden, während die Information über den Zustand eines Datenbits, d.h. ob das Datenbit eine "1" oder eine "0" repräsentiert, mittels einer Puls-Kodierung verschlüsselt werden kann.

Zusammenfassend kann die Erfindung darin gesehen werden, dass in einem elektronischen Bauelement elektronische Teil-Bauelemente, z.B. ein Logik- und/oder ein Speicherbauteil, mittels Wechselspannung anstelle von Gleichspannung betrieben werden. Als Speicherbauteile sind hierzu Flip-Flop Speicherbauteile verwendbar. Zum Beispiel wird eine Wechselspannung an ein Logik-Gatter angelegt. Hierdurch kann direkt die Wechselspannung, welche mittels eines elektromagnetischen Signals in einer Antennenspule induziert wird, verwendet werden, um das Logik-Gatter zu betreiben. Somit ist kein Gleichrichter-Schaltkreis mehr nötig. Vorzugsweise ist jedoch ein Spannungsbegrenzer zwischen der Antennenspule und dem Logik-Gatter und/oder Speicherbauteil vorzusehen. Erfindungsgemäß ist es möglich das Verhältnis von Fläche zu gespeicherter Information zu verringern.

Die erfinderische Idee kann somit darin gesehen werden, dass Logik- und/oder Speicherbauteile in einem Design in Paaren vorgesehen sind, welche aus jeweils zwei funktionsgleichen Teil-Bauelementen, z.B. Logik- und/oder Speicherbauteilen, bestehen, was es ermöglicht, dass die Logik- und/oder Speicherbauteile mit Wechselspannung betrieben werden können, d.h. dass sie mittels Wechselspannungssignale betrieben werden können, wobei nur geringe Änderungen in den Bauteilen durchgeführt werden müssen. Die Änderung besteht im Wesentlichen nur darin, dass die einzelnen elektronischen Bauteile, z.B. die Logikbauteile, in Paaren funktionsgleicher elektronischer Bauteile bereitgestellt sind, wobei die elektronischen Bauteile eines Paares derart eingerichtet sind, dass ein erstes elektronisches Bauteil eines Paares, während einer ersten Halbwelle der Wechselspannung ein Ausgangssignal bereitstellt, wohingegen das zweite elektronische Bauteil eines Paares, während einer zweiten Halbwelle, welche eine Phasenverschiebung von 180° zu der ersten Halbwelle aufweist, der Wechselspannung ein Ausgangssignal bereitstellt.

Ausführungsbeispiele der Erfindung sind in den Figuren dargestellt und werden im Weiteren näher erläutert.

Es zeigen:
- Fig. 1: eine schematische Darstellung, eines Teiles eines elektronischen Bauelements gemäß der Erfindung, welches ein Paar von funktionsgleichen elektronischen Teil-Bauelementen aufweist,
- Fig. 2: eine schematische Darstellung eines elektronischen Teil-Bauelements, bzw. eines Funktionsblockes, wie er im erfindungsgemäßen elektronischen Bauelement verwendet werden kann,
- Fig. 3: Ergebnisse einer Simulation eines 8-Bit RFID-Tags gemäß der Erfindung,
- Fig. 4: eine schematische Darstellung eines D-Latch Schaltkreises,
- Fig. 5: eine schematische Darstellung eines Frequenzteilers, wie er in einem erfindungsgemäßen elektronischen Bauelement verwendet werden kann, und
- Fig. 6: eine detailliertere Darstellung eines erfindungsgemäßen Inverters eines Frequenzteilers, welcher in einem erfindungsgemäßen elektronischen Bauelement verwendet werden kann.

Bezugnehmend auf die Figuren wird die erfinderische Idee genauer erläutert.

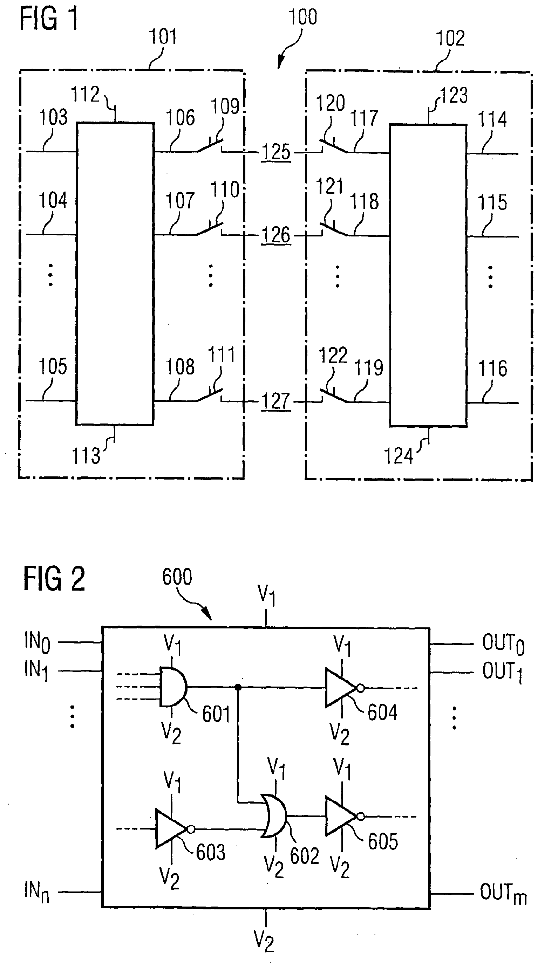

**Fig. 1** zeigt eine schematische Abbildung, eines Teiles eines elektronischen Bauelements 100 gemäß der Erfindung, welches ein Paar von funktionsgleichen elektronischen Teil-Bauelementen aufweist. Schematisch ist ein Paar von elektronischen Teil-Bauelementen, welche auch als Funktionsblöcke bezeichnet werden, dargestellt. Ein erstes elektronisches Teil-Bauelement 101 des Paares weist eine Mehrzahl von Eingangsanschlüssen 103, 104, 105... und eine Mehrzahl von Ausgangsanschlüssen 106, 107, 108... auf. Die einzelnen Ausgänge sind jeweils mit einem Schalter 109, 110, 111..., z.B. einem Transistor, versehen. Ferner sind schematisch die Anschlüsse 112 und 113 dargestellt, welche der Versorgung des ersten elektronischen Teil-Bauelements 101 mit einer Wechselspannung dienen. Weiterhin sind die Schalter 109, 110, 111... derart eingerichtet, dass sie mit einer ersten Halbwelle der Wechselspannung betrieben werden, oder anders ausgedrückt, dass sie auf eine Polarität der Wechselspannung schalten, d.h. ein Ausgangssignal des ersten elektronischen Teil-Bauelements wird über die Schalter 109, 110, 111... an die Ausgänge 106, 107, 108... weitergeleitet. Beispielsweise schalten die Transistoren, welche die Schalter 109, 110, 111... ausbilden, wenn die negative Phase der Wechselspannung an den Transistoren anliegt.

Das zweite elektronische Teil-Bauelement 102 des Paares weist eine Mehrzahl von Eingangsanschlüssen 114, 115, 116... und eine Mehrzahl von Ausgangsanschlüssen 117, 118, 119... auf. Die einzelnen Ausgänge sind jeweils mit einem Schalter 120, 121, 122..., z.B. einem Transistor, versehen. Ferner sind schematisch die Anschlüsse 123 und 124 dargestellt, welche der Versorgung des zweiten elektronischen Teil-Bauelements 102 mit einer Wechselspannung dienen. Weiterhin sind die Schalter 120, 121, 122... derart eingerichtet, dass sie auf die andere Polarität der Wechselspannung schalten als die des ersten elektronischen Teil-Bauelements 101, d.h. ein Ausgangssignal des zweiten elektronischen Teil-Bauelements 102 wird über die Schalter 120, 121, 122... an die Ausgänge 117, 118, 119... weitergeleitet. Beispielsweise schalten die Transistoren, welche die Schalter 120, 121, 122... ausbilden, wenn die positive Phase der Wechselspannung an den jeweiligen Transistoren anliegt, falls die Schalter 109, 110, 111... schalten, wenn die negative Phase der Wechselspannung an den jeweiligen Transistoren anliegt. Die zueinander korrespondierenden Ausgänge des ersten elektronischen Teil-Bauelements 101 und des zweiten elektronischen Teil-Bauelements 102 sind dann zusammengeschaltet, um jeweils einen Ausgang des elektronischen Bauelements 100 auszubilden. D.h. die beiden Ausgänge 106 und 117 bilden zusammen den Ausgang 125 des elektronischen Bauelements, die beiden Ausgänge 107 und 118 bilden zusammen den Ausgang 126 des elektronischen Bauelements und die beiden Ausgänge 108 und 119 bilden zusammen den Ausgang 127 des elektronischen Bauelements.

Auch ist zu beachten, dass die Phase der Versorgungsspannung des zweiten Teil-Bauelements 102 um 180° gegenüber der Versorgungsspannung des ersten elektronischen Teil-Bauelements 101 verschoben ist. D.h. das in Fig. 1 an den Anschlüssen 112 und 124 die gleiche Phase der Wechselspannung anliegt, wohingegen an den Anschlüssen 113 und 123 die um 180° verschobene Phase der Wechselspannung anliegt. Vorzugsweise ist vor die Versorgungsanschlüsse 112, 113, 123 und 124 ein Spannungsbegrenzer (nicht gezeigt) geschaltet, um zu verhindern, dass die elektronischen Teil-Bauelemente durch eine zu hohe Spannung zerstört werden. Dies ist insbesondere wichtig, weil die in einer Spule induzierte Wechselspannung von der Änderung des magnetischen Flusses durch die Spule hindurch abhängt, welcher wiederum zum Beispiel von dem Abstand der Spule vom Erzeuger des elektromagnetischen Feldes (im Falle eines passiven ID-Tags der Auslesevorrichtung) abhängt, welcher Abstand bei bestimmten Anwendungen schwer konstant gehalten werden kann.

Das in Fig. 1 gezeigte Ausbilden von Paaren von funktionsgleichen elektronischen Teil-Bauelemente, stellt auf einfache Weise die Möglichkeit bereit, dass ein elektronisches Bauelement während beider Halbwellen einer Wechselspannung betrieben werden kann, wobei die beiden Halbwellen um 180° phasenverschoben sind. Wenn die Wechselspannung an dem ersten elektronischen Teil-Bauelement 101 des Paares ihr Maximum erreicht, so schaltet das erste elektronische Teil-Bauelement 101 und die Wechselspannung am zweiten elektronischen Teil-Bauelement 102 des Paares erreicht ihr Minimum, und wenn die Wechselspannung an dem ersten elektronischen Teil-Bauelement 101 des Paares ihr Minimum erreicht, so schaltet das zweite elektronische Teil-Bauelement 102, an dem die Wechselspannung dann ihr Maximum erreicht.

Anschaulich kann das elektronische Bauelement so verstanden werden, dass die einzelnen elektronischen Teil-Bauelemente als Gleichspannungs-Blöcke angesehen werden, wenn die Amplitude zwischen den Anschlüssen 112 und 124 bzw. 113 und 123 ihr Maximum erreicht. Dann werden auch die Eingangssignale an der Eingängen der elektronischen Teil-Bauelemente 101 bzw. 102 verarbeitet. Die beiden elektronischen Teil-Bauelemente eines Paares erzeugen die Ausgangssignale, welche an den Ausgängen anliegen, für die Dauer jeweils einer Halbwelle. Da die beiden Halbwellen um 180° phasenverschoben sind, kann das elektronische Schaltelement ohne Unterbrechungen betrieben werden.

Die beiden funktionsgleichen elektronischen Teil-Bauelement eines Paares werden parallel verwendet, um eine zufriedenstellende Funktion des elektronischen Bauelements während der beiden Halbwellen einer Wechselspannung zu erzielen. Die beiden Funktionsblöcke teilen sich die Eingangssignale und die zueinander korrespondierenden Ausgänge der beiden elektronischen Teil-Bauelemente werden nach den Schaltern, z.B. Transistoren, miteinander gekoppelt.

Abhängig von der Zeitdauer, während welcher die elektronischen Teil-Bauelemente 101 und 102 als Gleichspannungsblöcke betrieben werden können, kann jeder bekannte einfache Logik-Schaltkreis, wie zum Beispiel Inverter, Logik-Gatter, oder Flip-Flop als Funktionsblöcke verwendet werden. Ein Logik-Schaltkreis kann auch aus einer Mehrzahl von einzelnen Logik-Gattern, wie zum Beispiel UND-Gattern, ODER-Gattern, Invertern, usw. aufgebaut sein. Die einzelnen Logik-Gatter können in mehreren Stufen hintereinander aufgebaut werden.

Zu beachten ist jedoch, dass, um einen logischen Zustand am Ausgang, während des Schaltens aufrecht erhalten zu können, die Kapazität an dem Ausgang an die Ströme angepasst sein müssen, welche während des Zeitintervalls des Schaltens fließen. Ferner muss die Treiberfähigkeit jedes individuellen elektronischen Teil-Bauelements des elektronischen Bauelements angepasst werden, so dass eine Logik-Stufe ihre alten Zustände nicht behält und dass sie stark genug ist, um die nächste Logik-Stufe zu treiben. Eine Eingangskapazität einer nächsten Stufe von elektronischen Teil-Bauelementen muss auf die Treiberfähigkeit der vorherigen Stufe von elektronischen Teil-Bauelementen angepasst werden.

**Fig. 2** zeigt eine schematische Darstellung eines elektronischen Teil-Bauelements 600, wie es als elektronisches Teil-Bauelement, oder anders gesagt als Funktionsblock, in dem elektronischen Bauelement verwendet werden kann. Als Beispiel ist schematisch ein Funktionsblock mit mehreren Eingängen, einem AND-Gatter 601, einem OR-Gatter 602 und drei Invertern 603, 604 und 605 dargestellt. In einem erfindungsgemäßen Bauelement können alle Arten von Logik-Gatter, Invertern und/oder Flip-Flops in einer oder mehreren Stufen hintereinandergeschaltet verwendet werden.

Als Ausführungsbeispiel der Erfindung wir nachfolgend eine einfaches Radiofrequenz-Identifizierungsmarke, nachfolgend auch als RFID-Tag bezeichnet, beschreiben. Bevor jedoch auf dessen Design eingegangen wird, wird ein spezielles Kodierverfahren ausgewählt und beschrieben.

Informationen können auf einem RFID-TAG mittels verschiedener Verfahren kodiert werden. In dem Ausführungsbeispiel wird jedes Bit an Information in einem zweidimensionalen Raum, d.h. in der Zeit und der Amplitude kodiert.

Das Zeitkodieren stellt ein Frequenzkodieren dar. Wenn ein Ausleser für ein RFID-Tag eine zeitveränderliche elektromagnetische Radiofrequenzwelle den so genannten Träger (Trägerwelle) aussendet, welche durch eine Frequenz f gekennzeichnet ist, wird jedes Bit mittels des folgenden Prinzips kodiert:
- das erste Bit, Bit 0, wird mittels der Frequenz f/2 kodiert,
- das zweite Bit, Bit 1, wird mittels der Frequenz f/4 kodiert,
- das dritte Bit, Bit 2, wird mittels der Frequenz f/8 kodiert, usw.
Die allgemeine Kodierformel ist somit, dass das n-te Bit mittels der Frequenz f/(2⁽ⁿ⁺¹⁾) kodiert wird.

Ein großer Nachteil dieses Kodierverfahrens ist die lange Zeitdauer, welche benötigt wird, um den Code, d.h. die kodierten Informationen, auszulesen, insbesondere wenn der Code lang gegenüber der Trägerfrequenz ist, d.h. wenn viele Bits an Informationen bei Verwendung einer niedrigen Trägerfrequenz übermittelt werden sollen. Dieser Nachteil könnte vermieden werden, wenn das Auslesen parallelisiert wird wobei die Frequenzen kombiniert werden, um sie miteinander zu modulieren.

Jedes Bit kann eines von zwei möglichen Booleschen Zuständen einnehmen, welche mit "0" und "1" gekennzeichnet werden. Bei dem Amplitudenkodieren, welches gemäß dem Ausführungsbeispiel verwendet wird, wird der Unterschied zwischen diesen beiden Zuständen mittels des Unterschiedes des Leistungsverbrauches in den beiden Zuständen ausgedrückt. D.h. der "0"-Zustand wird mittels eines Leistungsverbrauchs von *P₀ Watt* und der "1"-Zustand mittels eines Leistungsverbrauches von *P₁ Watt* kodiert, wobei P₁ = P₀ + diff, mit diff > *0 Watt* ist.

Mittels Kombinierens der beiden beschriebenen Kodierungsverfahren ist es möglich alle gewünschten Datenkombinationen zu kodieren. Die Bit-Nummer wird mittels der Frequenz kodiert (zeitkodiert) und der Bit-Zustand ("0" oder "1") mittels des Leistungsverbrauchs, d.h. mittels Pulskodierens. Mittels diese Verfahrens werden somit zwei verschiedene Datensätze, d.h. ein Datensatz für die Bit-Nummer und ein Datensatz für den Zustand des betreffenden Bits, kodiert. Für den Ausleser kann ein Spektrum des zeitlichen Leistungsverbrauchs mit einem Spektrum eines zeitlichen Widerstandverlaufs verglichen werden, wobei das RFID-Tag einen sich zeitlich ändernden Widerstand darstellt. Die Bestimmung dieses Widerstandes kann mittels der magnetischen Kopplungsregeln zwischen zwei Spulen, d.h. der Spule des Auslesers und der Spule des RFID-Tags, bestimmt werden, wobei die Ströme in der Ausleserspule gemessen werden, welche durch die Gegenwart des RFID-Tags induziert werden.

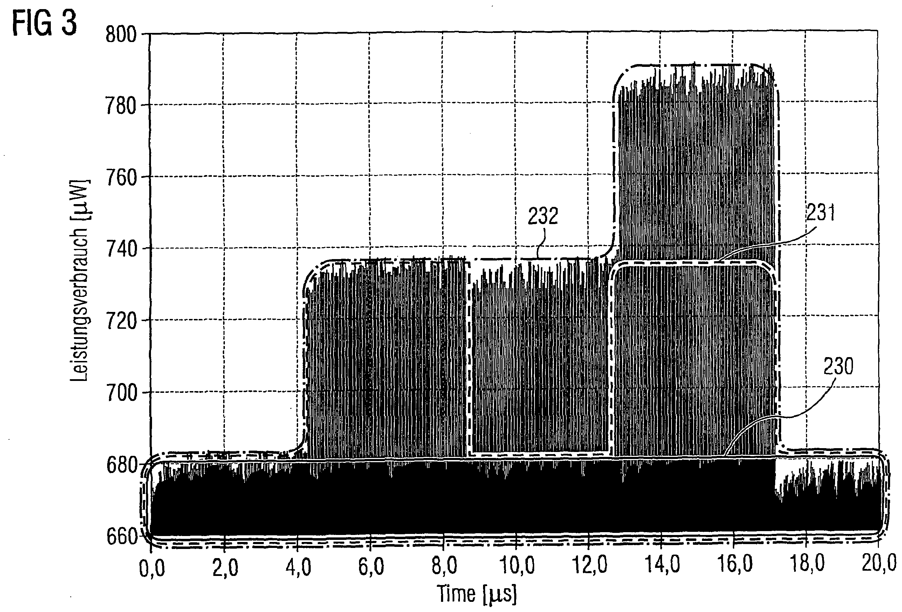

In **Fig. 3** sind Ergebnisse einer Simulation eines 8-Bit RFID-Tags gemäß der Erfindung dargestellt, wobei die Informationen des RFID-Tags mittels des oben beschriebenen kombinierten Kodierverfahrens kodiert wurden. Die X-Achse (Abzisse) in Fig. 3 stellt die Zeitachse in Mikrosekunden dar, wohingegen die Y-Achse (Ordinate) den Leistungsverbrauch in Einheiten von Mikrowatt durch das elektronische Bauelement darstellt, wobei der Leistungsverbrauch an den Spulenanschlüssen des Auslesers, d.h. über die Spule des Ausleser, gemessen wird.

In Fig. 3 ist der Leistungsverbrauch für drei verschiedene Bit-Konfigurationen dargestellt. Die einzelnen Verläufe des Leistungsverbrauchs, welche sich für die drei verschiedenen Bit-Konfigurationen ergeben, sind überlagert dargestellt.

In der ersten Konfiguration 230, in welcher der Leistungsverbrauch etwa 680 Mikrowatt beträgt, befinden sich alle Bits des 8-Bit RFID-Tags im "0"-Zustand. Dieser Leistungsverbrauch ist für die gesamte dargestellte Zeitdauer konstant, da sich kein Bit im "1"-Zustand befindet und somit auch keine zusätzliche frequenzmodulierte Last und damit ein zusätzlicher Leistungsverbrauch auftritt.

In der zweiten Konfiguration 231 ist das sechste Bit des 8-Bit RFID-Tags im "1"-Zustand, während sich die restlichen Bits des 8-Bit RFID-Tags im "0"-Zustand befinden. Der Verlauf des Leistungsverbrauch an den Spulenanschlüssen weist folgenden Verlauf auf. In der Zeitperiode von 0 bis etwa 4,25 Mikrosekunden beträgt der Leistungsverbrauch etwa 680 Mikrowatt. Innerhalb dieser Zeitperiode wirkt sich der "1"-Zustand des sechsten Bits nicht aus. In der Zeitperiode von etwa 4,25 bis etwa 8,5 Mikrosekunden steigt der Leistungsverbrauch auf etwa 735 Mikrowatt an. Der zusätzliche Leistungsverbrauch von etwa 55 Mikrowatt korrespondiert zu dem Lastanstieg, welcher durch das sich im "1"-Zustand befindliche sechste Bit verursacht wird. Von etwa 8,5 bis etwa 12,75 Mikrosekunden beträgt der Leistungsverbrauch wieder etwa 680 Mikrowatt. Innerhalb dieser Zeitperiode wirkt sich durch die Zeitkodierung die zusätzliche Last, welche durch den "1"-Zustand des sechsten Bits gebildet wird, nicht aus. Dies kommt daher, dass in der kombinierten Zeit- und Pulskodierung, die Nummer des Bits mittels Zeitkodierung durchgeführt wird und sich bei der gewählten Zeitkodierung der zusätzliche Leistungsverbrauch des sechsten Bits in dieser Zeitperiode nicht auswirkt. Von etwa 12,75 bis 17,0 Mikrosekunden steigt der Leistungsverbrauch wieder auf etwa 735 Mikrowatt an. Der zusätzliche Leistungsverbrauch von etwa 55 Mikrowatt korrespondiert wiederum zu dem Lastanstieg, welcher durch das sich im "1"-Zustand befindliche sechste Bit verursacht wird. In dieser Zeitperiode wirkt sich der zusätzliche Leistungsverbrauch, welcher durch den "1"-Zustand des sechsten Bits verursacht wird, wieder aus. In der restlichen in der Figur dargestellten Zeitperiode von etwa 17,0 bis etwa 20,0 Mikrosekunden beträgt der Leistungsverbrauch der zweiten Konfiguration 231 wiederum etwa 580 Mikrowatt.

In der dritten Konfiguration 232 ist das sechste Bit und das siebte Bit des 8-Bit RFID-Tags im "1"-Zustand, während sich die restlichen Bits des 8-Bit RFID-Tags im "0"-Zustand befinden. Der Verlauf des Leistungsverbrauch an den Spulenanschlüssen weist folgenden Verlauf auf. In der Zeitperiode von 0 bis etwa 4,25 Mikrosekunden beträgt der Leistungsverbrauch etwa 680 Mikrowatt. Innerhalb dieser Zeitperiode wirkt sich durch die Zeitkodierung weder der "1"-Zustand des sechsten Bits noch der "1"-Zustand des siebten Bits aus. Von etwa 4,25 bis etwa 8,5 Mikrosekunden steigt der Leistungsverbrauch auf etwa 735 Mikrowatt an. Der zusätzliche Leistungsverbrauch von etwa 55 Mikrowatt korrespondiert zu dem Lastanstieg, welcher durch das sich im "1"-Zustand befindliche sechste Bit verursacht wird. Von etwa 8,5 bis etwa 12,75 Mikrosekunden beträgt der Leistungsverbrauch weiterhin etwa 735 Mikrowatt. Innerhalb dieses Zeitbereichs wirkt sich durch die Zeitkodierung der Anstieg des Leistungsverbrauchs durch das siebte Bit aus. Wohingegen sich der zusätzliche Leistungsverbrauch durch den "1"-Zustand des sechsten Bits nicht auswirkt. In der Zeitperiode von etwa 12,75 bis etwa 17,0 Mikrosekunden beträgt der Leistungsverbrauch etwa 790 Mikrowatt. Innerhalb dieser Zeitperiode wirkt sich durch die Zeitkodierung sowohl der Anstieg des Leistungsverbrauchs, welcher durch den "1"-Zustand des sechsten Bits verursacht wird, als auch der Anstieg des Leistungsverbrauchs, welcher durch den "1"-Zustand des siebten Bits verursacht wird, aus. In der restlichen in der Figur dargestellten Zeitperiode von etwa 17,0 bis etwa 20,0 Mikrosekunden beträgt der Leistungsverbrauch der dritten Konfiguration 232 wiederum etwa 580 Mikrowatt. Während dieser Zeitperiode wirken sich weder der "1"-Zustand des sechsten Bits, noch der "1"-Zustand des siebten Bits aus.

Um das oben beschriebene Kodierverfahren in einem RFID-Tag zu implementieren, welches robust ist und nur eine geringe Fläche benötigt, wird ein Frequenzteiler zum Durchführen der Zeitkodierung benötigt.

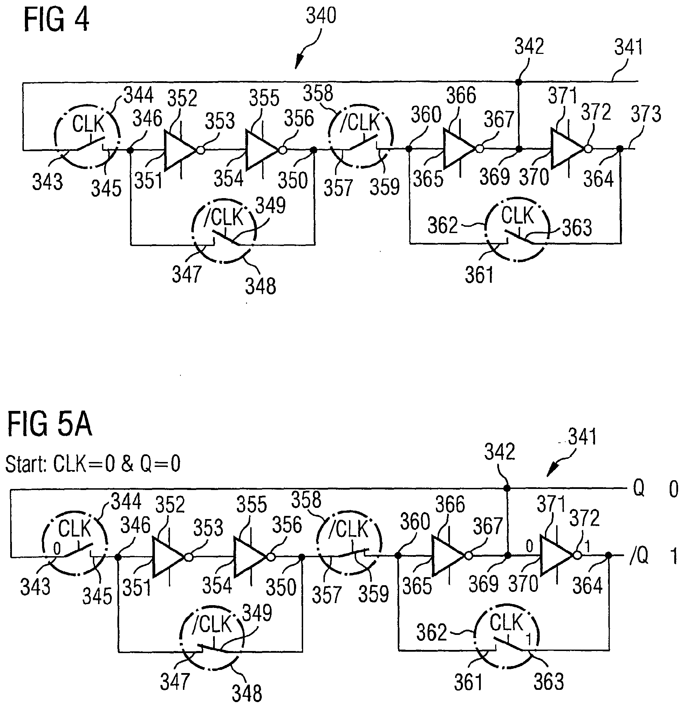

Ein Design eines Frequenzteilers basiert auf einem einfachen D-Latch, welches ein gut bekanntes und weitverbreitetes elektronisches Bauteil ist. Eine schematisch gehaltene Darstellung eines D-Latches ist in **Fig. 4** dargestellt.

Ein D-Latch 340, bzw. ein Frequenzteiler, weist einen ersten Ausgangsanschluss 341 auf. Der erste Ausgangsanschluss 341 ist mit einem ersten Knoten 342 gekoppelt. Der erste Knoten 342 ist mit einem ersten Anschluss 343 eines ersten Schalter 344 gekoppelt. Ein zweiter Anschluss 345 des ersten Schalters 344 ist mit einem zweiten Knoten 346 gekoppelt. Der zweite Knoten 346 ist mit einem ersten Anschluss 347 eines zweiten Schalters 348 gekoppelt. Ein zweiter Anschluss 349 des zweiten Schalters 348 ist mit einem dritten Knoten 350 gekoppelt. Der zweite Knoten 346 ist ferner mit einem ersten Anschluss 351 eines ersten Inverters 352 gekoppelt. Ein zweiter Anschluss 353 des ersten Inverters 352 ist mit einem ersten Anschluss 354 eines zweiten Inverters 355 gekoppelt. Ein zweiter Anschluss 356 des zweiten Inverters 355 ist mit dem dritten Knoten 350 gekoppelt.

Der dritte Knoten 350 ist mit einem ersten Anschluss 357 eines dritten Schalters 358 gekoppelt. Ein zweiter Anschluss 359 des dritten Schalters 358 ist mit einem vierten Knoten 360 gekoppelt. Der vierte Knoten 360 ist mit einem ersten Anschluss 361 eines vierten Schalters 362 gekoppelt. Ein zweiter Anschluss 363 des zweiten Schalters 362 ist mit einem fünften Knoten 364 gekoppelt. Der vierte Knoten 360 ist mit einem ersten Anschluss 365 eines dritten Inverters 366 gekoppelt. Ein zweiter Anschluss 367 des dritten Inverters 366 ist mit einem sechsten Knoten 369 gekoppelt. Der sechste Knoten 369 ist mit einem ersten Anschluss 370 eines vierten Inverters 371 gekoppelt. Ein zweiter Anschluss 372 des vierten Inverters 371 ist mit dem fünften Knoten 364 gekoppelt. Der sechste Knoten 369 ist ferner mit dem ersten Knoten 342 gekoppelt. Der fünfte Knoten 364 ist ferner mit einem zweiten Ausgangsanschluss 373 des D-Latches gekoppelt. Der erste, zweite, dritte und vierte Inverter werden jeweils mittels Wechselspannungen VDD und VSS versorgt.

Wenn am ersten und vierten Schalter ein erstes Taktsignal CLK angelegt ist, wird am zweiten und dritten Schalter ein zweites Taktsignal \CLK angelegt, die beiden Taktsignale sind differentiell zueinander. Das bedeutet, wenn der erste und vierte Schalter geöffnet sind, d.h. an ihnen das Taktsignal \CLK angelegt sind, sind der zweite und dritte Schalter geschlossen, d.h. es ist ein Taktsignal CLK angelegt, und umgekehrt. Die Schalter können zum Beispiel als Transistor ausgebildet sein, wobei dann der erste und zweite Anschluss jeweils einem ersten und zweiten Source/Drain-Anschluss entsprechen und das Taktsignal an das Gate des jeweiligen Transistors angelegt wird.

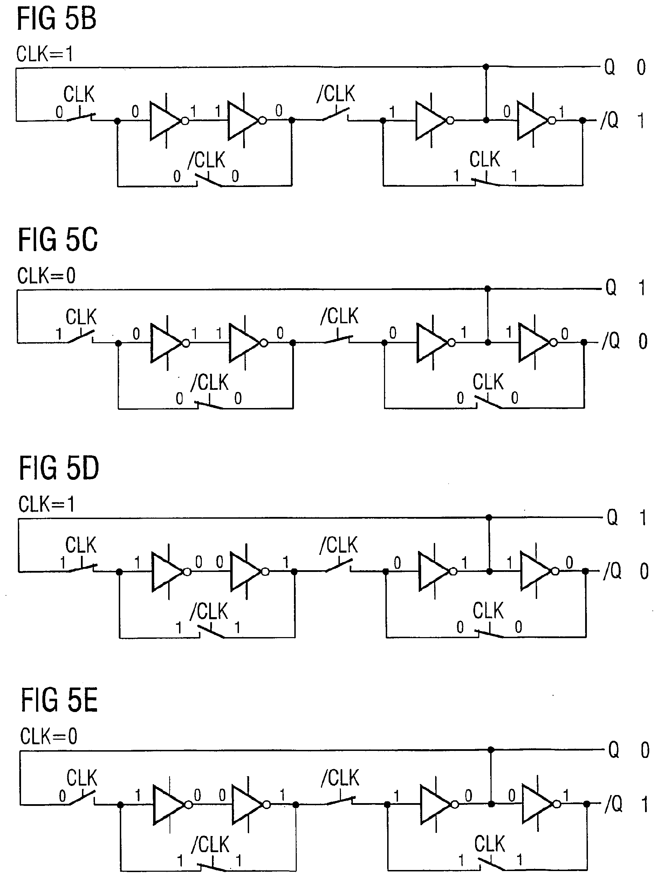

In **Fig. 5** wird die Funktionsweise eines D-Latches der Fig. 4 als Frequenzteilers beschrieben.

In Fig. 5a ist der Frequenzteiler aus Fig. 4 in seinem Anfangszustand dargestellt. Als Anfangszustand wurde ein Zustand gewählt, in welchem das Taktsignal CLK einem Zustand "0" entspricht, d.h. kein Taktsignal am ersten und am vierten Schalter anliegt und diese geöffnet sind und in welchem am ersten Ausganganschluss 341 ein "0"-Zustand anliegt. Dies bedeutet einerseits, dass der zweite und dritte Schalter geschlossen sind. Andererseits bedeutet es, dass am ersten Anschluss 342 des ersten Schalters 343, am ersten Knoten 341, am sechsten Knoten 369 und damit am ersten Anschluss 370 des vierten Inverters 371 eine "0" anliegt. Dies führt dazu, dass am zweiten Anschluss 372 des vierten Inverters 371, am fünften Knoten 364 und am zweiten Anschluss 363 des vierten Schalter 362 eine "1" anliegt. Somit liegt auch am zweiten Ausgangsanschluss 373 des Frequenzteilers eine "1" an.

In Fig. 5b ist der Frequenzteiler aus Fig. 5a in einem Zustand einen halben Takt später dargestellt, d.h. das Taktsignal CLK ist in einem Zustand "1". Damit liegt ein Taktsignal am ersten und am vierten Schalter an und diese sind geschlossen, wohingegen am zweiten und am dritten Schalter kein Taktsignal anliegt und diese geöffnet sind. Hierdurch ergibt sich für den Frequenzteiler der Fig. 5b der folgende Zustand.

Am ersten Schalter 344 liegt an beiden Anschlüssen ein "0" Zustand an, somit liegt dieser "0" Zustand auch am zweiten Knoten 346, am ersten Anschluss 347 des zweiten Schalters 348 und am ersten Anschluss 351 des ersten Inverters 352 an. Somit liegt sowohl am zweiten Anschluss 353 des ersten Inverters 352 und am ersten Anschluss 354 des zweiten Inverters 355 ein "1" Zustand an. Somit liegt am zweiten Anschluss 356 des zweiten Inverters 355 am dritten Knoten 350, am zweiten Anschluss 349 des zweiten Schalters 348 und am ersten Anschluss 357 des dritten Schalters 358 ein "0" Zustand an.

Am ersten Ausgangsanschluss 341 des Frequenzteilers 340, dem ersten Knoten 342, dem sechsten Knoten 369, dem ersten Anschluss 370 des vierten Inverters 371 und dem zweiten Anschluss 367 des dritten Inverters 366 liegt weiterhin ein "0" Zustand an. Somit liegt am zweiten Anschluss 372 des vierten Inverters 371, dem fünften Knoten 364, dem zweiten Ausgangsanschluss 373 des Frequenzteilers, dem beiden Anschlüssen des vierten Schalters 362, dem zweiten Anschluss 359 des dritten Schalters 358 dem vierten Knoten 360 und am ersten Anschluss 365 des dritten Inverters 366 ein "1" Zustand an.

In Fig. 5c ist der Frequenzteiler aus Fig. 5b in einem Zustand einen halben Takt später dargestellt, d.h. das Taktsignal CLK ist in einem Zustand "0". Damit liegt kein Taktsignal am ersten und am vierten Schalter an und diese sind geöffnet, wohingegen am zweiten und am dritten Schalter ein Taktsignal anliegt und diese geschlossen sind. Hierdurch ergibt sich für den Frequenzteiler der Fig. 5c der folgende Zustand.

Am ersten Anschluss 343 des ersten Schalter 344 liegt ein "1" Zustand an, wohingegen am zweiten Anschluss 345 des zweiten Schalters 344 ein "0" Zustand anliegt. Somit liegt dieser "0" Zustand auch am zweiten Knoten 346, am ersten Anschluss 347 des zweiten Schalters 348 und am ersten Anschluss 351 des ersten Inverters 352 an. Somit liegt sowohl am zweiten Anschluss 353 des ersten Inverters 352 und am ersten Anschluss 354 des zweiten Inverters 355 ein "1" Zustand an. Somit liegt am zweiten Anschluss 356 des zweiten Inverters 355, am dritten Knoten 350, am zweiten Anschluss 349 des zweiten Schalters 348 und am ersten Anschluss 357 des dritten Schalters 358 ein "0" Zustand an.

Am ersten Ausgangsanschluss 341 des Frequenzteilers 340, dem ersten Knoten 342, dem sechsten Knoten 369, dem ersten Anschluss 370 des vierten Inverters 371 und dem zweiten Anschluss 367 des dritten Inverters 366 liegt nun ein "1" Zustand an. Somit liegt am zweiten Anschluss 372 des vierten Inverters 371, dem fünften Knoten 364, dem zweiten Ausgangsanschluss 373 des Frequenzteilers, dem beiden Anschlüssen des vierten Schalters 362, dem zweiten Anschluss 359 des dritten Schalters 358 dem vierten Knoten 360 und am ersten Anschluss 365 des dritten Inverters 366 ein "0" Zustand an.

In Fig. 5d ist der Frequenzteiler aus Fig. 5c in einem Zustand einen halben Takt später dargestellt, d.h. das Taktsignal CLK ist in einem Zustand "1". Damit liegt ein Taktsignal am ersten und am vierten Schalter an und diese sind geschlossen, wohingegen am zweiten und am dritten Schalter kein Taktsignal anliegt und diese geöffnet sind. Hierdurch ergibt sich für den Frequenzteiler der Fig. 5d der folgende Zustand.

Am ersten Schalter 344 liegt an beiden Anschlüssen ein "1" Zustand an, somit liegt dieser "1" Zustand auch am zweiten Knoten 346, am ersten Anschluss 347 des zweiten Schalters 348 und am ersten Anschluss 351 des ersten Inverters 352 an. Somit liegt sowohl am zweiten Anschluss 353 des ersten Inverters 352 und am ersten Anschluss 354 des zweiten Inverters 355 ein "0" Zustand an. Somit liegt am zweiten Anschluss 356 des zweiten Inverters 355, am dritten Knoten 350, am zweiten Anschluss 349 des zweiten Schalters 348 und am ersten Anschluss 357 des dritten Schalters 358 ein "1" Zustand an.

Am ersten Ausgangsanschluss 341 des Frequenzteilers 340, dem ersten Knoten 342, dem sechsten Knoten 369, dem ersten Anschluss 370 des vierten Inverters 371 und dem zweiten Anschluss 367 des dritten Inverters 366 liegt weiterhin ein "1" Zustand an. Somit liegt am zweiten Anschluss 372 des vierten Inverters 371, dem fünften Knoten 364, dem zweiten Ausgangsanschluss 373 des Frequenzteilers, dem beiden Anschlüssen des vierten Schalters 362, dem zweiten Anschluss 359 des dritten Schalters 358 dem vierten Knoten 360 und am ersten Anschluss 365 des dritten Inverters 366 ein "0" Zustand an.

In Fig. 5e ist der Frequenzteiler aus Fig. 5d in einem Zustand einen halben Takt später dargestellt, d.h. das Taktsignal CLK ist in einem Zustand "0". Damit liegt kein Taktsignal am ersten und am vierten Schalter an und diese sind geöffnet, wohingegen am zweiten und am dritten Schalter ein Taktsignal anliegt und diese geschlossen sind. Hierdurch ergibt sich für den Frequenzteiler der Fig. 5e der folgende Zustand.

Am ersten Anschluss 343 des ersten Schalter 344 liegt ein "0" Zustand an, wohingegen am zweiten Anschluss 345 des zweiten Schalters 344 ein "1" Zustand anliegt. Somit liegt dieser "1" Zustand auch am zweiten Knoten 346, am ersten Anschluss 347 des zweiten Schalters 348 und am ersten Anschluss 351 des ersten Inverters 352 an. Somit liegt sowohl am zweiten Anschluss 353 des ersten Inverters 352 und am ersten Anschluss 354 des zweiten Inverters 355 ein "0" Zustand an. Somit liegt am zweiten Anschluss 356 des zweiten Inverters 355, am dritten Knoten 350, am zweiten Anschluss 349 des zweiten Schalters 348 und am ersten Anschluss 357 des dritten Schalters 358 ein "1" Zustand an.

Am ersten Ausgangsanschluss 341 des Frequenzteilers 340, dem ersten Knoten 342, dem sechsten Knoten 369, dem ersten Anschluss 370 des vierten Inverters 371 und dem zweiten Anschluss 367 des dritten Inverters 366 liegt nun ein "0" Zustand an. Somit liegt am zweiten Anschluss 372 des vierten Inverters 371, dem fünften Knoten 364, dem zweiten Ausgangsanschluss 373 des Frequenzteilers, dem beiden Anschlüssen des vierten Schalters 362, dem zweiten Anschluss 359 des dritten Schalters 358 dem vierten Knoten 360 und am ersten Anschluss 365 des dritten Inverters 366 ein "1" Zustand an.

Somit ist erkennbar, dass das D-Latch der Fig. 5 als ein Frequenzteiler verwendet werden kann. Wenn ein Taktsignal der Eingangsfrequenz f für die Schalter verwendet wird, ergibt sich die Ausgangsfrequenz, welche an den Ausgangsanschlüssen 341 und 373 anliegt, zu f/2.

Solche Frequenzteiler können in Ketten hintereinander geschaltet werden, um alle Frequenzen der Reihe f/(2⁽ⁿ⁺¹⁾) zu erzeugen, welche für die Zeitkodierung des oben beschriebenen kombinierten Kodierungsverfahrens benötigt werden. Hierzu wird der erste Ausgangsanschluss 341 mit dem Takteingang der nachfolgenden Stufe gekoppelt. Hierdurch lässt dich eine Frequenzreihe von f/(2⁽ⁿ⁺¹⁾) erzeugen, welche an den ersten Ausgängen 341 der korrespondieren Stufen der einzelnen Frequenzteiler abgegriffen werden kann. Jeder Ausgangsanschluss Qₙ einer Frequenzteilerstufe n wird entweder mit einer Last gekoppelt oder nicht mit einer Last gekoppelt, um den globalen Leistungsverbrauch entweder zu steigern oder nicht zu steigern und somit eine Amplitudenkodierung der Datenbits der auf dem RFID-TAG gespeicherten Information durchführen zu können. Durch den in Fig. 5 erläuterten Frequenzteiler lässt sich somit die oben erläuterte kombinierte Kodierung durchführen.

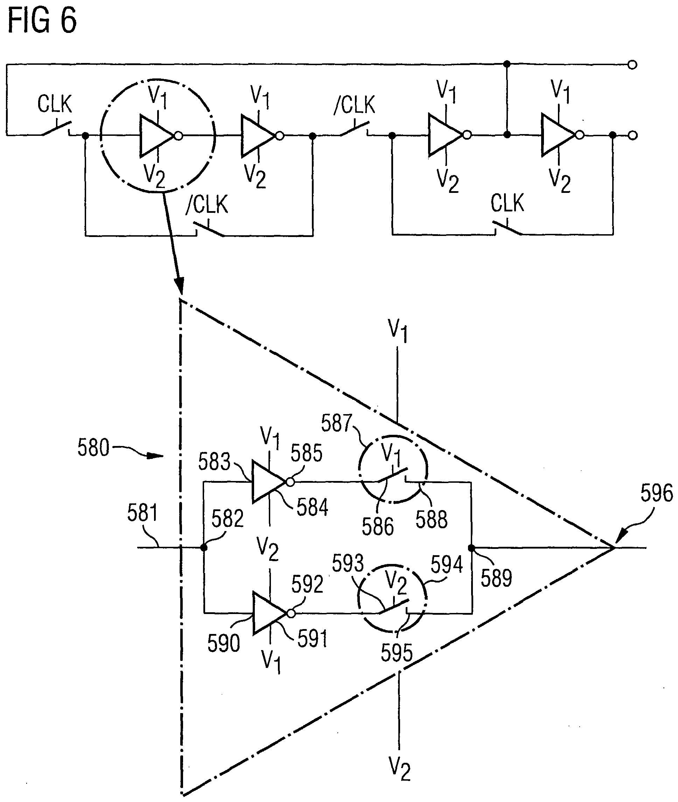

Das unter Bezugnahme auf Fig. 5 erläuterte D-Latch verwendet Gleichspannungen, welche als VDD und VSS an die Inverter angelegt werden. Wie bereits erläutert erzeugt die Antennenspule eines RFID-Tags jedoch eine Wechselspannung. Somit muss das Latch bzw. der Frequenzteiler aus Fig. 5 angepasst werden, um mittels Wechselspannung betrieben werden zu können. Dies wird unter Bezug auf Fig. 6 erläutert.

In **Fig. 6** ist gezeigt wie die Inverter eines Frequenzteilers verändert werden müssen, damit sie mittels Wechselspannung betrieben werden können. Fig. 6 zeigt ein Detail aus dem Aufbau eines Inverters aus Fig. 5. Die Idee hierzu ist, dass anstelle eines einzelnen Inverters ein Paar von funktionsgleichen Invertern verwendet wird. Dies ist in Fig. 6 dargestellt.

Ein erfindungsgemäßer Inverter 580 weist einen Eingangsanschluss 581 auf. Der Eingangsanschluss 581 ist mit einem ersten Knoten 582 gekoppelt. Der erste Knoten 582 ist mit einem ersten Eingang 583 eines ersten herkömmlichen Inverters 584 gekoppelt. Ein erster Ausgang 585 des ersten herkömmlichen Inverters 584 ist mit einem ersten Anschluss 586 eines ersten Schalters 587 gekoppelt. Ein zweiter Anschluss 588 des ersten Schalters 587 ist mit einem zweiten Knoten 589 gekoppelt.

Ferner ist der erste Knoten 582 ist mit einem ersten Anschluss 590 eines zweiten herkömmlichen Inverters 591 gekoppelt. Ein erster Anschluss 592 des zweiten herkömmlichen Inverters 591 ist mit einem ersten Anschluss 593 eines zweiten Schalters 594 gekoppelt. Ein zweiter Anschluss 595 des zweiten Schalters 594 ist mit dem zweiten Knoten 589 gekoppelt. Der zweite Knoten 589 ist mit einem Ausgangsanschluss 596 des erfindungsgemäßen Inverters gekoppelt.

An den ersten und zweiten herkömmlichen Inverter wird eine Wechselspannung als Versorgungsspannung angeschlossen. Die Wechselspannung wird hierbei so an die Inverter angelegt, dass der erste herkömmliche Inverter 584 in einer ersten Halbwelle, d.h. mit einer ersten Polarität, der Wechselspannung betrieben wird, wohingegen der zweite herkömmliche Inverter 591 mit der zweiten Halbwelle, d.h. mit einer zweiten Polarität, der Wechselspannung betrieben wird. Ferner wird der erste Schalter 587 mit der ersten Halbwelle der Wechselspannung geschaltet, wohingegen der zweite Schalter 594 mit der zweiten Halbwelle der Wechselspannung geschaltet wird. Als erster und zweiter Schalter können Transistoren verwendet werden. In diesem Fall stellen jeweils der erste und zweite Anschluss des ersten und zweiten Schalters erste und zweite Source/Drain Anschlüsse dar und die Wechselspannung wird an die Gates der Transistoren angelegt, um diese zu schalten.

Somit kann der erfindungsgemäße Inverter der Fig. 6 mit einer Wechselspannung betrieben werden. Er stellt während beider Halbwellen einer Wechselspannung ein Ausgangssignal bereit.

Der erste herkömmliche Inverter 584 und der erste Schalter 587 stellen einen ersten funktionellen Block dar, welcher ein Beispiel für ein erstes elektronisches Teil-Bauelements eines Paares von funktionsgleichen elektronischen Teil-Bauelementen ist, wie es in der Fig. 1 dargestellt ist.

Der zweite herkömmliche Inverter 591 und der erste Schalter 594 stellen einen zweiten funktionellen Block dar, welcher ein Beispiel für das zweite elektronische Teil-Bauelement des Paares von funktionsgleichen elektronischen Teil-Bauelementen ist, wie es in der Fig. 1 dargestellt ist.

Zur Veranschaulichung ist in Fig. 6 oberhalb des soeben beschriebenen erfindungsgemäßen Inverters noch einmal der Frequenzteiler aus Fig. 5 dargestellt. Jeweils ein erfindungsgemäßer Inverter kann als Inverter in dem Frequenzteiler der Fig. 5 eingesetzt werden, um so einen erfindungsgemäßen Frequenzteiler zu schaffen, welcher mit einer Wechselspannung betrieben werden kann.

Der in Fig. 6 gezeigte erfindungsgemäße Inverter ist nur als ein Beispiel für ein Paar von elektronischen Teil-Bauelementen zu verstehen. Es können beliebige bekannte Logik- und Speicherbauteile, wie zum Beispiel AND-Gatter, OR-Gatter, NOR-Gatter, NAND-Gatter, EXOR-Gatter, Inverter, Flip-Flop usw. und Kombinationen einstufig oder in mehreren Stufen hintereinander geschaltet, als ein Funktionsblock wie er in Fig. 1 schematisch gezeigt ist, eingesetzt werden, um ein erfindungsgemäßes elektronisches Bauelement auszubilden. Die erfinderische Idee besteht darin, dass, um ein Betrieb mit Wechselspannung zu ermöglichen die einzelnen elektronischen Teil-Bauelemente als Paare von funktionsgleichen elektronischen Teil-Bauelementen bereitgestellt werden, von denen ein Teil-Bauelement des Paares in einer ersten Halbwelle der Wechselspannung betrieben wird, wohingegen das zweite Teil-Bauelement des Paares in der zweiten Halbwelle der Wechselspannung betrieben wird.

In diesem Dokument sind folgende Dokumente zitiert:
[1] An Ultra Small RF Identification Chip for Individual Recognition Applications, Mitsuo Usami, et al., IEEE International Solid-State Circuits Conference (2003), Session 22.7
[2] GB 2 165 423
[3] US 2003/0102961
[4] US 5,870,031
[5] WO 00/64004

### Bezugszeichenliste

- 100: elektronischer Schaltkreis
- 101: erstes elektronisches Bauteil
- 102: zweites elektronisches Bauteil
- 103: Eingangsanschluss
- 104: Eingangsanschluss
- 105: Eingangsanschluss
- 106: Ausgangsanschluss
- 107: Ausgangsanschluss
- 108: Ausgangsanschluss
- 109: Schalter
- 110: Schalter
- 111: Schalter
- 112: Versorgungsanschluss des ersten elektronischen Bauteils
- 113: Versorgungsanschluss des ersten elektronischen Bauteils
- 114: Eingangsanschluss
- 115: Eingangsanschluss
- 116: Eingangsanschluss
- 117: Ausgangsanschluss
- 118: Ausgangsanschluss
- 119: Ausgangsanschluss
- 120: Schalter
- 121: Schalter
- 122: Schalter
- 123: Versorgungsanschluss des zweiten elektronischen Bauteils
- 124: Versorgungsanschluss des zweiten elektronischen Bauteils
- 125: Ausgangsanschluss des elektronischen Schaltkreises
- 126: Ausgangsanschluss des elektronischen Schaltkreises
- 127: Ausgangsanschluss des elektronischen Schaltkreises
- 230: erste Konfiguration
- 231: zweite Konfiguration
- 232: dritte Konfiguration
- 340: D-Latch
- 341: erster Ausgangsanschluss des D-Latches
- 342: erster Knoten
- 343: erster Anschluss eines ersten Schalters
- 344: erster Schalter
- 345: zweiter Anschluss des ersten Schalters
- 346: zweiter Knoten
- 347: erster Anschluss eines zweiten Schalters
- 348: erster Schalter
- 349: zweiter Anschluss des zweiten Schalters
- 350: dritter Knoten
- 351: erster Anschluss eines ersten Inverters
- 352: erster Inverter
- 353: zweiter Anschluss des ersten Inverters
- 354: erster Anschluss eines zweiten Inverters
- 355: zweiten Inverter
- 356: zweiter Anschluss des zweiten Inverters
- 357: erster Anschluss eines dritten Schalters
- 358: dritter Schalter
- 359: zweiter Anschluss des dritten Schalters
- 360: vierter Knoten
- 361: erster Anschluss eines vierten Schalters
- 362: vierter Schalter
- 363: zweiter Anschluss des vierten Schalters
- 364: fünfter Knoten
- 365: erster Anschluss eines dritten Inverters
- 366: dritter Inverter
- 367: zweiter Anschluss des dritten Inverters
- 369: sechster Knoten
- 370: erster Anschluss eines vierten Inverters
- 371: vierter Inverter
- 372: zweiter Anschluss des vierten Inverters
- 373: zweiter Ausgangsanschluss des D-Latches
- 580: erfindungsgemäßer Inverter
- 481: Eingangsanschluss des erfindungsgemäßen Inverters
- 582: erster Knoten
- 583: erster Anschluss eines ersten herkömmlichen Inverters
- 584: erster herkömmlicher Inverter
- 585: zweiter Anschluss des ersten herkömmlichen Inverters
- 586: erster Anschluss eines ersten Schalters
- 587: erster Schalter
- 588: zweiter Anschluss des ersten Schalters
- 589: zweiter Knoten
- 590: erster Anschluss eines zweiten herkömmlichen Inverters
- 591: zweiter herkömmlicher Inverter
- 592: zweiter Anschluss des zweiten herkömmlichen Inverters
- 593: erster Anschluss eines zweiten Schalters
- 594: zweiter Schalter
- 595: zweiter Anschluss des ersten Schalters
- 596: Ausgangsanschluss des erfindungsgemäßen Inverters
- 600: elektronisches Bauteil
- 601: AND-Gatter
- 602: OR-Gatter
- 603: Inverter
- 604: Inverter
- 605: Inverter

## Patentansprüche

1. Elektronisches Bauelement, welches mittels einer Wechselspannung betreibbar ist und welches aufweist:
mindestens einen Eingang,
mindestens einen Ausgang und
ein Paar von funktionsgleichen elektronischen Teil-Bauelementen, welches Logik- und/oder Speicherbauteile aufweist, wobei die beiden elektronischen Teil-Bauelemente parallel zueinander zusammengeschaltet sind, bei dem der mindestens eine Eingang des elektronischen Bauelements mit einem jeweiligen Eingang der beiden funktionsgleichen elektronischen Teil-Bauelemente gekoppelt ist,
bei dem der mindestens eine Ausgang des elektronischen Bauelements mit einem jeweiligen Ausgang der beiden funktionsgleichen elektronischen Teil-Bauelementen gekoppelt ist, und
bei dem das elektronische Bauelement derart eingerichtet ist, dass am mindestens einen Ausgang während einer ersten Halbwelle der Wechselspannung nur ein Ausgangsignal eines ersten Teil-Bauelementes des Paares von funktionsgleichen elektronischen Teil-Bauelementen abgreifbar ist, wohingegen während der zweiten Halbwelle der Wechselspannung nur ein Ausgangsignal des zweiten Teil-Bauelementes des Paares von funktionsgleichen elektronischen Teil-Bauelementen abgreifbar ist.

2. Elektronisches Bauelement gemäß Anspruch 1, bei dem das elektronische Bauelement eine Mehrzahl von Paaren von funktionsgleichen elektronischen Teil-Bauelementen aufweist.

3. Elektronisches Bauelement gemäß Anspruch 1 oder 2, bei dem zumindest ein Paar von funktionsgleichen elektronischen Teil-Bauelementen Logik-Gatter, Inverter und/oder Flip-Flops aufweist.

4. Elektronisches Bauelement gemäß einem der Ansprüche 1 bis 3, bei dem das elektronische Bauelement eine Spule aufweist.

5. Elektronisches Bauelement gemäß einem der Ansprüche 1 bis 4, welches einen Spannungsbegrenzer aufweist, welcher die Wechselspannung begrenzt, welche an einem elektronischen Teil-Bauelement des Paares von funktionsgleichen elektronischen Teil-Bauelementen anliegt.

6. Elektronisches Bauelement gemäß einem der Ansprüche 1 bis 5, bei dem eines der elektronischen Teil-Bauelemente eines Paares von funktionsgleichen elektronischen Teil-Bauelementen einen Schalter aufweist.

7. ID-Tag, welches ein elektronisches Bauelement gemäß einem der Ansprüche 1 bis 6 aufweist.

8. ID-Tag gemäß Anspruch 7, bei dem das ID-Tag einen Speicher zum Speichern von Informationen aufweist.

9. ID-Tag gemäß Anspruch 7 oder 8, bei dem das ID-Tag einen Kodierer zum Kodieren von Informationen aufweist.

10. ID-Tag gemäß Anspruch 9, bei dem der Kodierer derart eingerichtet ist, dass mit ihm Zeit-Kodierung und/oder Puls-Kodierung möglich ist.

11. Anordnung, welche ein ID-Tag, gemäß einem der Ansprüche 7 bis 10 und eine Lesevorrichtung aufweist, wobei die Lesevorrichtung und das ID-Tag derart eingerichtet sind, dass sie berührungsfrei miteinander kommunizieren können.

## Claims

1. Electronic component that can be operated by means of an AC voltage and which comprises:
at least one input,
at least one output and
a pair of functionally identical electronic sub-components, which pair comprises logic and/or memory components, wherein the two electronic sub-components are interconnected in parallel with one another,
in which the at least one input of the electronic component is connected to a respective input of the two functionally identical electronic sub-components,
in which the at least one output of the electronic component is connected to a respective output of the two functionally identical electronic sub-components, and
in which the electronic component is configured in such a way that at the at least one output only one output signal of a first sub-component of the pair of functionally identical electronic sub-components can be picked up during a first half-wave of an AC voltage, whereas only one output signal of the second sub-component of the pair of functionally identical electronic sub-components can be picked up during the second half-wave of the AC voltage.

2. Electronic component according to Claim 1, in which the electronic component comprises a plurality of pairs of functionally identical electronic sub-components.

3. Electronic component according to Claim 1 or 2, in which at least one pair of functionally identical electronic sub-components comprises logic-gates, inverters and/or flip-flops.

4. Electronic component according to one of the Claims 1 to 3, in which the electronic component comprises a coil.

5. Electronic component according to one of the Claims 1 to 4, comprising a voltage limiter, which limits the AC voltage lying across an electronic sub-component of the pair of functionally identical electronic sub-components.

6. Electronic component according to one of the Claims 1 to 5, in which one of the electronic sub-components of a pair of functionally identical electronic sub-components comprises a switch.

7. ID tag comprising an electronic component according to one of the Claims 1 to 6.

8. ID tag according to Claim 7, in which the ID tag comprises a memory for storing information.

9. ID tag according to Claim 7 or 8, in which the ID tag comprises an encoder for coding information.

10. ID tag according to Claim 9, in which the encoder is configured such that it can be used for time-coding and/or pulse-coding.

11. Arrangement comprising an ID tag according to one of the Claims 7 to 10 and a read device, the read device and the ID tag being configured such that they can communicate with each other without contact.

## Revendications

1. Composant électronique pouvant être mis en fonctionnement au moyen d'une tension alternative et comportant :
au moins une entrée, au moins une sortie et une paire de composants électroniques partiels ayant les mêmes fonctions, laquelle paire comporte des composants logiques et/ou de mémoire, dans lequel les deux composants électroniques partiels sont connectés en commun en parallèle l'un par rapport à l'autre, dans lequel l'au moins une entrée du composant électronique est couplée à une entrée respective des deux composants électroniques partiels ayant les mêmes fonctions,
dans lequel l'au moins une sortie du composant électronique est couplée à une sortie respective des deux composants électroniques partiels ayant les mêmes fonctions, et
dans lequel le composant électronique est conçu de manière à ce que seul un signal de sortie d'un premier composant partiel de la paire de composants électroniques partiels ayant les mêmes fonctions puisse être prélevé à l'au moins une sortie pendant une première demi-onde de la tension alternative, tandis que seul un signal de sortie du deuxième composant partiel de la paire de composants électroniques partiels ayant les mêmes fonctions peut être prélevé pendant la deuxième demi-onde de la tension alternative.

2. Composant électronique selon la revendication 1, dans lequel le composant électronique comporte une pluralité de paires de composants électroniques partiels ayant les mêmes fonctions.

3. Composant électronique selon la revendication 1 ou 2, dans lequel au moins une paire de composants électroniques partiels ayant les mêmes fonctions comporte des portes logiques, des onduleurs et/ou des bascules.

4. Composant électronique selon l'une quelconque des revendications 1 à 3, dans lequel le composant électronique comporte une bobine.

5. Composant électronique selon l'une quelconque des revendications 1 à 4, comportant un limiteur de tension qui limite la tension alternative, lequel limiteur de tension est adjacent à un composant électronique partiel de la paire de composants électroniques partiels ayant les mêmes fonctions.

6. Composant électronique selon l'une quelconque des revendications 1 à 5, dans lequel l'un des composants électroniques partiels d'une paire de composants électroniques partiels ayant les mêmes fonctions comporte un commutateur.

7. Étiquette d'identité, comportant un composant électronique selon l'une quelconque des revendications 1 à 6.

8. Étiquette d'identité selon la revendication 7, dans lequel l'étiquette d'identité comporte une mémoire destinée à stocker des informations.

9. Étiquette d'identité selon la revendication 7 ou 8, dans laquelle l'étiquette d'identité comporte un codeur destiné à coder des informations.

10. Étiquette d'identité selon la revendication 9, dans laquelle le codeur est conçu de manière à ce qu'il permette un codage temporel et/ou un codage par impulsions.

11. Système comportant une étiquette d'identité selon l'une quelconque des revendications 7 à 10, et un dispositif de lecture, dans lequel le dispositif de lecture et l'étiquette d'identité sont conçus de manière à ce qu'ils puissent communiquer l'un avec l'autre sans contact.
